# EUROPÄISCHE PATENTSCHRIFT

(11) **EP 3 003 790 B1**
(45) Veröffentlichungstag und Bekanntmachung des Hinweises auf die Patenterteilung: **14.06.2017**
(21) Anmeldenummer: 14715575.8
(22) Anmeldetag: 03.04.2014
(51) Int. Cl.: B60R 21/017

(54) **ELEKTRONISCHER AIRBAG-ZÜNDKREIS MIT VERÄNDERLICHER ZÜNDSTROMDAUER**
ELECTRONIC AIRBAG IGNITION CIRCUIT WITH VARIABLE TURN-ON CURRENT DURATION
CIRCUIT ÉLECTRONIQUE D'AMORÇAGE D'AIRBAG AVEC DURÉE DE COURANT DE DÉCLENCHEMENT VARIABLE

(30) Priorität: 07.06.2013 DE 102013210603
(43) Veröffentlichungstag der Anmeldung: 13.04.2016
(73) Patentinhaber: Robert Bosch GmbH, 70442 Stuttgart (DE)
(72) Erfinder: WALKER, Steffen, 72770 Reutlingen (DE)
(86) Internationale Anmeldenummer: PCT/EP2014/056643
(87) Internationale Veröffentlichungsnummer: WO 2014/195044

(56) Entgegenhaltungen:
- EP-A1- 1 602 532
- WO-A1-00/30902
- DE-A1-102005 003 245
- DE-A1-102007 002 339
- DE-A1-102007 050 564

## Beschreibung

Die vorliegende Erfindung betrifft einen elektronischen Airbag-Zündkreis, welcher ein erstes und ein zweites Schaltmittel sowie eine zweite elektrisch leitfähig mit einem Steueranschluss des zweiten Schaltmittels verbundene zweite Ansteuerschaltung umfasst, welche dazu ausgebildet ist, das zweite Schaltmittel in einem ersten Auslöse-Modus für eine erste vorbestimmte Dauer und in einem zweiten Auslöse-Modus für eine zweite, von der ersten Dauer verschiedene, vorbestimmte Dauer zu schließen.

### Stand der Technik

Airbag-Zündkreise, siehe DE 102005003245 A insbesondere für Kraftfahrzeuge, werden standardmäßig mit einer pyrotechnischen Zündpille beschaltet, welche bei Bestromung einen Gasgenerator betätigt und damit einen Airbag auslöst. Elektrisch entsprechen derartige Zündpillen einem ohmschen Widerstand. Ab dem Zeitpunkt der Airbag-Zündung wird zur Auslösung des Airbags die Zündpille für eine vorbestimmte Dauer mit einem vorbestimmten Auslösestrom bestromt. Neuerdings können elektronische Zündkreise jedoch auch mit einer Induktivität beziehungsweise mit magnetischen Aktuatoren beschaltet werden. Besonders beliebt ist die Beschaltung mit sogenannten
LEA (low-energy-actuator)-Magnetaktuatoren, also mit magnetischen Aktuatoren, welche einen sehr geringen Energieverbrauch aufweisen. Solche LEA-Magnetaktuatoren kommen üblicherweise in aktiven Kopfstützen oder in elektrischen beziehungsweise elektronischen Schaltungen zum Einsatz, welche der Aktivierung von Überrollbügeln dienen. In mit solchen LEA-Magnetaktuatoren beschalteten Airbag-Zündkreisen findet keine Explosion einer Zündpille statt, sondern ein durch einen Zündstrom aufgebautes Magnetfeld bewegt einen Aktuator.

Die meisten elektronischen Airbag-Zündkreise des Standes der Technik, welche zur Bestromung eines magnetischen Aktuators verwandt werden, weisen eine Endstufe auf, welche eine sogenannte Highside sowie eine sogenannte Lowside umfasst. Im Wesentlichen bestehen sowohl die High- als auch die Lowside solcher Endstufen aus jeweils einem Schaltmittel, über welche eine mit der Endstufe des Airbag-Zündkreises verbundene Induktivität eines magnetischen Aktuators zur Bestromung mit den Versorgungsspannungsanschlüssen eines Energiespeichers verbindbar ist. Das die Lowside der Endstufe im Wesentlichen ausbildende Schaltmittel wird dabei als Schalter betrieben, um den Zündstrom, welcher bei Auslösung des Airbags durch die Induktivität des Magnetaktuators fließt, zu einem Versorgungsspannungsanschluss, meist nach Masse, abzuführen.

Liegen Fehlerbedingungen vor, kommt es beispielsweise zu einem Kurzschluss des Airbag-Zündkreises beziehungsweise zu einem Kurzschluss innerhalb des Airbag-Zündkreises, so wird der, durch eine mit dem Airbag-Zündkreis verbundene Induktivität, fließende Strom im Stand der Technik durch eine Schaltung auf einen Stromwert begrenzt, welcher unterhalb des für eine Zündung des Airbags erforderlichen Zündstroms liegt. Dennoch stellen solche Kurzschlussfälle eine erhebliche Belastung für die Lowside dar, welche zu einer Zerstörung des gesamten Airbag-Zündkreises und/oder gar zu einem Nichtauslösen des Airbags bei Unfällen führen können.

### Offenbarung der Erfindung

Erfindungsgemäß wird ein elektronischer Airbag-Zündkreis zur Verfügung gestellt, welcher einen ersten und einen zweiten Eingang zur elektrisch leitfähigen Verbindung mit den Polen eines Energiespeichers umfasst. Ferner umfasst der Airbag-Zündkreis einen ersten und einen zweiten Ausgang zur elektrisch leitfähigen Verbindung mit einem ersten und einem zweiten Anschluss eines magnetischen Aktuators. Des Weiteren umfasst der elektronische Airbag-Zündkreis ein erstes Schaltmittel, dessen Schaltstrecke elektrisch leitfähig mit dem ersten Eingang und dem ersten Ausgang verbunden ist, sowie ein zweites Schaltmittel, dessen Schaltstrecke elektrisch leitfähig mit dem zweiten Eingang und dem zweiten Ausgang verbunden ist. Ferner weist der elektronische Airbag-Zündkreis eine zweite elektrisch leitfähig mit einem Steueranschluss des zweiten Schaltmittels verbundene zweite Ansteuerschaltung auf.

Erfindungsgemäß ist die zweite Ansteuerschaltung dazu ausgebildet, das zweite Schaltmittel in einem ersten Auslöse-Modus für eine erste vorbestimmte Dauer und in einem zweiten Auslöse-Modus für eine zweite, von der ersten Dauer verschiedene, vorbestimmte Dauer zu schließen.

Der Vorteil eines derartigen elektronischen Airbag-Zündkreises liegt darin, dass das die Lowside bildende zweite Schaltmittel beziehungsweise der elektronische Airbag-Zündkreis durch eventuell auftretende Kurzschlüsse innerhalb des elektronischen Airbag-Zündkreises weniger belastet wird. Die Erfindung ermöglicht es, den erfindungsgemäßen elektronischen Airbag-Zündkreis innerhalb von bereits bekannten beziehungsweise herkömmlich erhältlichen, integrierten Lösungen beziehungsweise anwendungsspezifischen, integrierten Schaltkreisen zu realisieren beziehungsweise zu implementieren, welche auch schon bereits zur Bestromung von Airbag-Zündpillen eingesetzt wurden. Somit bietet der erfindungsgemäße elektronische Airbag-Zündkreis eine sehr kostengünstige Möglichkeit zur Bestromung magnetischer Aktuatoren.

Bevorzugt bildet das erste Schaltmittel einen Teil der Highside des Airbag-Zündkreises und das zweite Schaltmittel einen Teil der Lowside des Airbag-Zündkreises.

Erfindungsgemäß wird das zweite Schaltmittel im ersten Auslöse-Modus betrieben, wenn der Stromfluss durch die Schaltstrecke des zweiten Schaltmittels im Zeitpunkt der Airbag-Zündung einem im Kurzschlussfall durch den elektronischen Airbag-Zündkreis fließenden Kurzschlussstrom entspricht. Ferner bevorzugt weist der erfindungsgemäße Airbag-Zündkreis ein Mittel zur Messung des Stromflusses durch den Airbag-Zündkreis auf. Mit einer derartigen Ausführungsform ist es möglich, die Dauer, in welcher ein Kurzschlussstrom durch die Schaltstrecke des zweiten Schaltmittels, also durch die Lowside fließt, zu begrenzen. Somit wird die Lowside im Kurzschlussfall nicht überlastet.

Vorzugsweise wird das zweite Schaltmittel im zweiten Auslöse-Modus betrieben, wenn der durch die Schaltstrecke des zweiten Schaltmittels fließende Strom im Zeitpunkt der Airbag-Zündung ungleich einem im Kurzschlussfall durch den elektronischen Airbag-Zündkreis fließenden Kurzschlussstrom ist. Ferner bevorzugt wird das zweite Schaltmittel im zweiten Auslöse-Modus betrieben, wenn der durch die Schaltstrecke des zweiten Schaltmittels fließende Strom im Zeitpunkt der Airbag-Zündung kleiner als ein im Kurzschlussfall durch den elektronischen Airbag-Zündkreis fließender Kurzschlussstrom ist. Fließt kein Kurzschlussstrom durch den Airbag-Zündkreis, muss das zweite Schaltmittel, also die Lowside, zur Auslösung eines Airbags länger als bei einer Bestromung einer Airbag-Zündpille elektrisch leitfähig sein. Damit wird berücksichtigt, dass eine Induktivität dem Aufbau eines sie durchfließenden Stroms entgegenwirkt.

In einer bevorzugten Ausführungsform ist die erste vorbestimmte Dauer kürzer als die zweite vorbestimmte Dauer. Durch die unterschiedlichen Dauern in den verschiedenen Auslöse-Modi wird der jeweils unterschiedlichen Belastung des Airbag-Zündkreises in verschiedenen Betriebszuständen Rechnung getragen.

Vorzugsweise entspricht die während des zweiten Auslöse-Modus an dem ersten Schaltmittel insgesamt umgesetzte Leistung nach Ablauf der zweiten Dauer derjenigen Leistung, deren Umsetzung an dem ersten Schaltmittel maximal zulässig ist. Ferner bevorzugt entspricht die zweite vorbestimmte Dauer der Summe aus der Dauer, welche die finale Auslösung des Airbags nach vollständig aufgebautem Strom in Anspruch nimmt, und der Dauer, welche der Aufbau des Zündstroms in Anspruch nimmt.

Bevorzugt umfasst der elektronische Airbag-Zündkreis ferner eine elektrisch leitfähig mit einem Steueranschluss des ersten Schaltmittels verbundene erste Ansteuerschaltung, welche eine Zündstromdetektionseinheit und/oder eine Einheit zur Kontrolle eines Zündstroms aufweist. Dadurch kann unter anderem eine Plausibilitätsprüfung der Airbag-Auslösung durchgeführt werden.

Ferner bevorzugt ist der magnetische Aktuator als LEA-Magnetaktuator ausgeführt. Mit anderen Worten ausgedrückt, ist der magnetische Aktuator bevorzugt als low-energy-actuator ausgeführt. Abermals mit anderen Worten ausgedrückt, ist der magnetische Aktuator bevorzugt als magnetischer Aktuator mit geringem beziehungsweise minimalem Energieverbrauch ausgeführt. Derartige Aktuatoren verbrauchen, verglichen mit anderen Aktuatoren, besonders wenig beziehungsweise ein Minimum an Energie. Ferner sind sie im Gegensatz zu Zündpillen nach der Auslösung beziehungsweise Zündung des Airbags wiederverwendbar.

Vorzugsweise ist der elektronische Airbag-Zündkreis als integrierter Schaltkreis ausgeführt. Integrierte Schaltkreise sind sehr kompakt ausführbar und für viele Anwendungen als fertige Bauelemente kostengünstig erwerbbar.

Des Weiteren bevorzugt ist der integrierte Schaltkreis als ASIC realisiert. Mit anderen Worten ausgedrückt, ist der integrierte Schaltkreis beziehungsweise der elektronische Airbag-Zündkreis bevorzugt als application specific integrated circuit ausgeführt. Abermals mit anderen Worten ausgedrückt, ist der elektronische Airbag-Zündkreis bevorzugt als anwendungsspezifische integrierte Schaltung ausgeführt.

In einer bevorzugten Ausführungsform weist derjenige Pol des Energiespeichers, welcher mit dem zweiten Eingang verbunden ist, ein Massepotenzial auf.

Ferner wird ein Kraftfahrzeug mit einem erfindungsgemäßen elektronischen Airbag-Zündkreis bereitgestellt, wobei die Batterie mit einem Antriebssystem des Kraftfahrzeugs verbunden ist.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein Ausführungsbeispiel eines erfindungsgemäßen elektronischen Airbag-Zündkreises,
Figur 2 eine Darstellung des Betriebs des zweiten Schaltmittels des elektronischen Airbag-Zündkreises im ersten sowie zweiten Auslöse-Modus, und
Figur 3 eine Darstellung des Stromverlaufs an dem magnetischen Aktuator während des zweiten Auslöse-Modus.

### Ausführungsformen der Erfindung

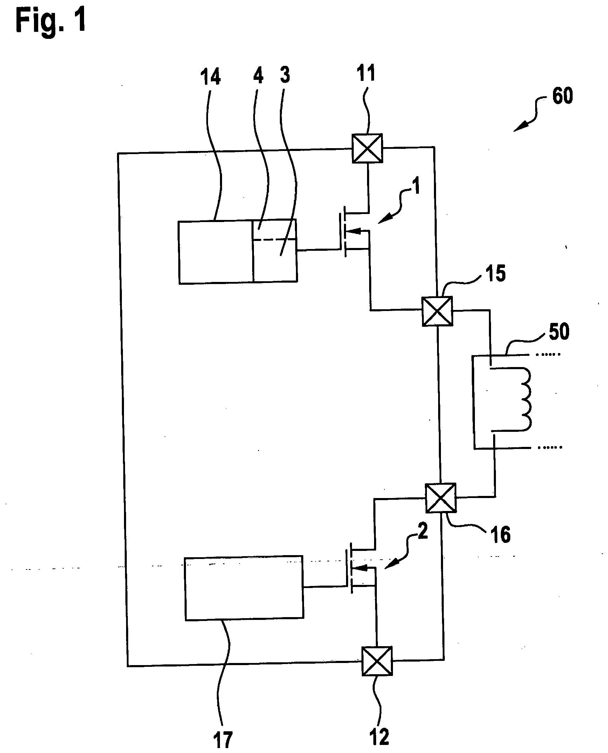

In der Figur 1 ist ein Ausführungsbeispiel eines erfindungsgemäßen elektronischen Airbag-Zündkreises 60 dargestellt. In diesem Ausführungsbeispiel ist der elektronische Airbag-Zündkreis 60 rein beispielhaft als integrierter Schaltkreis, beziehungsweise genauer ausgedrückt als ASIC, also als application specific integrated circuit beziehungsweise als anwendungsspezifischer, integrierter Schaltkreis ausgeführt. Erfindungsgemäße elektronische Airbag-Zündkreise können allerdings auch anders, beispielsweise als nicht integrierte Schaltungen, realisiert sein, welche zum Beispiel auch aus diskreten elektronischen Bauteilen zusammengesetzt sein können. Der elektronische Airbag-Zündkreis 60 umfasst einen ersten und einen zweiten Eingang 11,12 zur elektrisch leitfähigen Verbindung mit den Polen eines Energiespeichers sowie einen ersten und einen zweiten Ausgang 15,16 zur elektrisch leitfähigen Verbindung mit einem ersten und einem zweiten Anschluss eines magnetischen Aktuators 50. In diesem Ausführungsbeispiel sind sowohl der erste und zweite Eingang 11, 12 als auch der erste und zweite Ausgang 15, 16 rein beispielhaft durch Pins des ASICs, also des application specific integrated circuits beziehungsweise des anwendungsspezifischen, integrierten Schaltkreises gebildet. Des Weiteren umfasst der elektronische Airbag-Zündkreis 60 ein erstes Schaltmittel 1, dessen Schaltstrecke elektrisch leitfähig mit dem ersten Eingang 11 und dem ersten Ausgang 15 verbunden ist sowie ein zweites Schaltmittel 2, dessen Schaltstrecke elektrisch leitfähig mit dem zweiten Eingang 12 und dem zweiten Ausgang 16 verbunden ist. In diesem Ausführungsbeispiel sind sowohl das erste als auch das zweite Schaltmittel 1, 2 rein beispielhaft als MOSFETs ausgeführt. Es können allerdings auch andere Schaltmittelarten zur Realisierung erfindungsgemäßer elektronischer Airbag-Zündkreise 60 verwandt werden. Das erste Schaltmittel 1 kann auch als Highside-Schaltmittel bezeichnet werden, bildet also einen wesentlichen Teil der Highside des elektronischen Airbag-Zündkreises 60. Das zweite Schaltmittel 2 kann auch als Lowside-Schaltmittel bezeichnet werden, bildet also einen wesentlichen Teil der Lowside des elektronischen Airbag-Zündkreises 60.

Ferner umfasst der elektronische Airbag-Zündkreis 60 eine zweite elektrisch leitfähig mit einem Steueranschluss des zweiten Schaltmittels 2 verbundene zweite Ansteuerschaltung 17 sowie eine optionale erste, elektrisch leitfähig mit einem Steueranschluss des ersten Schaltmittels 1 verbundene erste Ansteuerschaltung 14. Die optionale erste Ansteuerschaltung 14 umfasst in diesem Ausführungsbeispiel rein beispielhaft ferner eine optionale Zündstromdetektionseinheit 4 sowie eine optionale Einheit zur Kontrolle eines Zündstroms 3. Mit der optionalen Zündstromdetektionseinheit 4 ist es möglich, das Fließen eines Zündstroms innerhalb des erfindungsgemäßen elektronischen Airbag-Zündkreises 60 zu detektieren. Dabei registriert die optionale Zündstromdetektionseinheit 4 das Fließen eines Zündstroms, sobald der Betrag desselben eine vorbestimmte Schwelle überschreitet. Mit der Zündstromdetektionseinheit 4 ist es möglich, eine Plausibilitätsprüfung der Airbag-Auslösung durchzuführen, welche von den Einheiten, die der Auslösung des Airbags dienen, unabhängig erfolgt. Mit der optionalen Einheit zur Kontrolle eines Zündstroms 3 kann die Bestromung eines mit dem elektronischen Airbag-Zündkreis 60 verbundenen magnetischen Aktuators 50, beziehungsweise die Bestromung einer mit dem elektronischen Airbag-Zündkreis 60 verbundenen Induktivität eines magnetischen Aktuators 50 gesteuert werden. Soll eine Airbag-Zündung initiiert werden, so steuert die Einheit zur Kontrolle eines Zündstroms 3 das erste Schaltmittel 1 und die zweite Ansteuerschaltung 17 das zweite Schaltmittel 2 an, schließt also sowohl das erste Schalmittel 1 sowie das zweite Schaltmittel 2, und ermöglicht so den Fluss eines Zündstroms durch eine mit dem elektronischen Airbag-Zündkreis 60 verbundene Induktivität eines magnetischen Aktuators 50 und somit das Auslösen des Airbags.

In dem in Figur 1 dargestellten Ausführungsbeispiel eines elektronischen Airbag-Zündkreises 60 ist selbiger über seinen ersten und seinen zweiten Ausgang 15, 16 mit einer Induktivität eines magnetischen Aktuators 50 elektrisch leitfähig verbunden. Von dem magnetischen Aktuator 50 selbst ist in Figur 1 lediglich die Induktivität sowie ein Teil des Gehäuses des magnetischen Aktuators 50 angedeutet. Weder die Induktivität noch der magnetische Aktuator 50 sind Teil des erfindungsgemäßen elektronischen Airbag-Zündkreises 60. Es können also auch erfindungsgemäße elektronische Airbag-Zündkreise 60 ausgeführt werden, welche nicht mit einem magnetischen Aktuator 50 beziehungsweise dessen Induktivität verbunden sind. In diesem Ausführungsbeispiel ist der mit dem elektronischen Airbag-Zündkreis 60 verbundene magnetische Aktuator 50 als LEA-Magnetaktuator ausgeführt.

Ferner ist in diesem Ausführungsbeispiel die zweite Ansteuerschaltung 17 dazu ausgebildet, das zweite Schaltmittel 2 in einem ersten Auslöse-Modus für eine erste vorbestimmte Dauer und in einem zweiten Auslöse-Modus für eine zweite, von der ersten Dauer verschiedene, vorbestimmte Dauer zu schließen. Mit anderen Worten ausgedrückt, ermöglicht der erfindungsgemäße elektronische Airbag-Zündkreis 60 die Ansteuerung des zweiten Schaltmittels 2, also des Lowside-Schaltmittels, in zwei verschiedenen Auslöse- beziehungsweise Zündmodi. Der erste und der zweite Auslöse-Modus unterscheiden sich im Wesentlichen durch die jeweilige Dauer der Ansteuerung des zweiten Schaltmittels 2, also mit anderen Worten ausgedrückt in der Dauer, in welcher das zweite Schaltmittel 2 je Auslöse-Modus geschlossen ist. In diesem Ausführungsbeispiel wird das zweite Schaltmittel 2 im ersten Auslöse-Modus betrieben, wenn der Stromfluss durch die Schaltstrecke des zweiten Schaltmittels 2 im Zeitpunkt der elektronischen Airbag-Zündung einem im Kurzschlussfall durch den elektronischen Airbag-Zündkreis 60 fließenden Kurzschlussstrom entspricht. In diesem Ausführungsbeispiel umfasst der elektronische Airbag-Zündkreis 60 ferner ein Mittel zur Messung des Stromflusses durch den elektronischen Airbag-Zündkreis 60 beziehungsweise ein Mittel zur Detektion eines Kurzschlussstroms (nicht dargestellt), welches in diesem Ausführungsbeispiel rein beispielhaft den Spannungsabfall zwischen dem zweiten Ausgang 16 und dem zweiten Eingang 12 misst und aus diesem, unter Berücksichtigung weiterer Messwerte, auf den durch den elektronischen Airbag-Zündkreis 60 fließenden Strom schließt. Es können allerdings auch erfindungsgemäße elektronische Airbag-Zündkreise 60 realisiert werden, bei welchen die Messung des Vorliegens eines Kurzschlusses auf andere Art und Weise und beispielsweise ohne ein Mittel zur Messung des Stromflusses durch den elektronischen Airbag-Zündkreis 60 beziehungsweise ohne ein Mittel zur Detektion eines Kurzschlussstroms erfolgt. Mit anderen Worten ausgedrückt, ist der erfindungsgemäße elektronische Airbag-Zündkreis 60 dazu ausgebildet, einen mit dem elektronischen Airbag-Zündkreis 60 verbundenen magnetischen Aktuator 50 in einem ersten Auslösezustand für eine vorbestimmte erste Dauer zu bestromen, wenn das Mittel zur Messung des Stromflusses durch den elektronischen Airbag-Zündkreis 60 im Zeitpunkt der Zündung des Airbags einen Kurzschlussstrom misst.

Ferner ist der erfindungsgemäße elektronische Airbag-Zündkreis 60 beziehungsweise die zweite Ansteuerschaltung 17 in diesem Ausführungsbeispiel rein beispielhaft dazu ausgebildet, das zweite Schaltmittel 2 im zweiten Auslöse-Modus zu betreiben, wenn der durch die Schaltstrecke des zweiten Schaltmittels 2 fließende Strom im Zeitpunkt der Airbag-Zündung kleiner als ein im Kurzschlussfall durch den elektronischen Airbag-Zündkreis 60 fließender Kurzschlussstrom ist. Mit anderen Worten ausgedrückt, ist der elektronische Airbag-Zündkreis 60 dazu ausgebildet, einen mit dem Airbag-Zündkreis 60 verbundenen magnetischen Aktuator 50 in einem zweiten Auslöse-Modus für eine vorbestimmte zweite Dauer zu bestromen, wenn in einem Zeitpunkt der Airbag-Zündung kein Kurzschlussstrom in dem elektronischen Airbag-Zündkreis 60 fließt.

In diesem Ausführungsbeispiel ist die erste vorbestimmte Dauer rein beispielhaft kürzer als die zweite vorbestimmte Dauer. Die Wahl der voreingestellten beziehungsweise vorbestimmten ersten und zweiten Dauer orientiert sich dabei an der Größe der mit dem elektronischen Airbag-Zündkreis 60 verbundenen Induktivität. In diesem Ausführungsbeispiel entspricht die vorbestimmte erste Dauer rein beispielhaft einem Wert von 1,8 ms, während die vorbestimmte zweite Dauer rein beispielhaft einem Wert von 3 ms entspricht. Es können allerdings auch erfindungsgemäße elektronische Airbag-Zündkreise 60 ausgeführt werden, in welchen die erste und zweite vorbestimmte Dauer beispielsweise wesentlich länger oder kürzer, als wie oben beschrieben, gewählt ist.

Durch die verschiedenen Ansteuerarten im ersten und zweiten Auslöse-Modus ist also die Dauer, in welcher ein Zündstrom durch die Induktivität des magnetischen Aktuators 50 fließt, an den jeweiligen Belastungsfall des elektronischen Airbag-Zündkreises 60 beziehungsweise des ersten und zweiten Schaltmittels 1, 2 angepasst, welcher im Wesentlichen durch das Fließen beziehungsweise das Nicht-Fließen eines Kurzschlussstroms bestimmt wird.

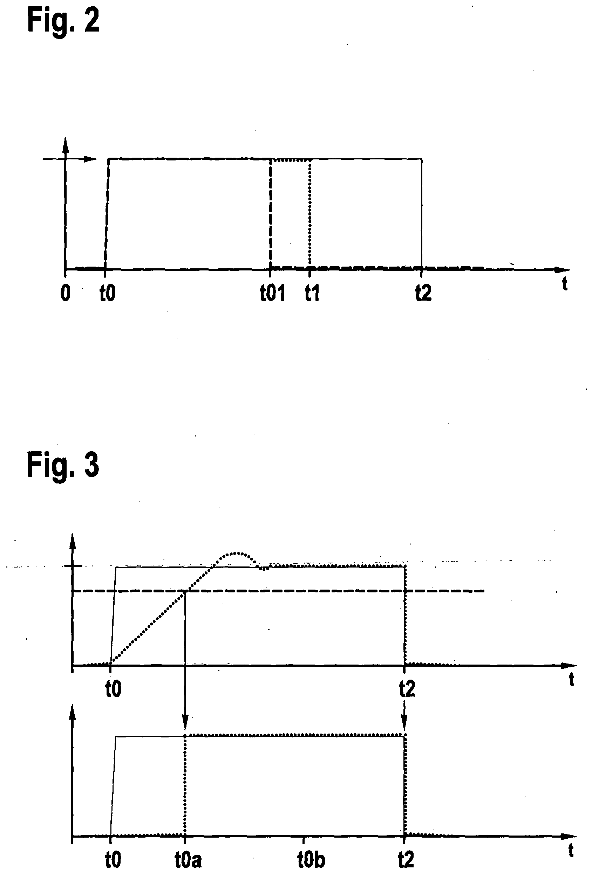

Die Figur 2 zeigt eine Darstellung des Betriebs des zweiten Schaltmittels 2 des elektronischen Airbag-Zündkreises 60 im ersten sowie zweiten Auslöse-Modus.

Bei dem elektronischen Airbag-Zündkreis 60, dessen Betrieb in Figur 2 gezeigt ist, handelt es sich rein beispielhaft um den in Figur 1 dargestellten Airbag-Zündkreis 60. Genauer ausgedrückt, ist in der Figur 2 abgebildet, wie das Schaltmittel 2 beziehungsweise die Lowside des elektronischen Airbag-Zündkreises 60 während des ersten sowie zweiten Auslöse-Modus betrieben wird. Auf der Abszisse ist in Figur 2 die Zeit t abgetragen, während auf der Ordinate der Betriebszustand des zweiten Schaltmittels 2, welcher in der Darstellung der Figur 2 zur Vereinfachung lediglich die Ausprägungen "geöffnet" beziehungsweise "geschlossen" annehmen kann, abgetragen ist. Verläuft eine Linie auf der Abszisse der Figur 2, so kennzeichnet dies einen Betriebszustand, in welchem das zweite Schaltmittel 2 geöffnet ist. Verläuft eine Linie auf der Höhe des in Figur 2 eingezeichneten Pfeils, so kennzeichnet dies einen Betriebszustand, in welchem das zweite Schaltmittel 2 geschlossen ist. Der Verlauf der gestrichelten Linie zeigt dabei, in welchem Zeitraum, also über welche erste Dauer, das zweite Schaltmittel 2 im ersten Auslöse-Modus geschlossen ist. Ferner zeigt der Verlauf der durchgezogenen Linie in Figur 2, in welchem Zeitraum, also für welche zweite Dauer, das zweite Schaltmittel 2 im zweiten Auslöse-Modus geschlossen ist. Der Verlauf der gepunkteten Linie in Figur 2 zeigt im Vergleich zu den zuvor gennannten Linien den Zeitraum beziehungsweise die Dauer, in welchem das zweite Schaltmittel 2 im Stand der Technik unabhängig von dem Vorliegen eines Kurzschlusses zur Auslösung einer Zündpille geschlossen beziehungsweise angesteuert wird.

Bis zum Zeitpunkt t0, welcher die Einschaltung des zweiten Schaltmittels 2 beziehungsweise der Lowside und damit gleichzeitig die Initialisierung einer Airbag-Auslösung kennzeichnet, ist das zweite Schaltmittel 2 geöffnet, södass kein Zündstrom durch den elektronischen Airbag-Zündkreis 60 fließt. Zum Zeitpunkt t0 wird das zweite Schaltmittel 2 geschlossen. Am kürzesten, nämlich für die vörbestimmte erste Dauer, welche in diesem Ausführungsbeispiel rein beispielhaft 1,8 ms beträgt, ist das zweite Schaltmittel 2 im ersten Auslöse-Modus geschlossen. Schon bei t01, also in diesem Ausführungsbeispiel nach rein beispielhaft 1,8 ms, wird das zweite Schaltmittel 2 wieder geöffnet. Die Kürze der vorbestimmten ersten Dauer lässt sich mit dem im Kurzschlussfall fließenden hohen Kurzschlussstrom erklären, welcher eine hohe Belastung für den elektronischen Airbag-Zündkreis 60 und insbesondere für das erste und zweite Schaltmittel 1, 2 darstellt. Nach der Zeit t1 wird das zweite Schaltmittel 2 im Stand der Technik, unabhängig von dem eventuellen Fließen eines Kurzschlussstroms geöffnet. Im Stand der Technik existiert also keine Fallunterscheidung bei der Ansteuerung des zweiten Schaltmittels 2 beziehungsweise der Lowside. Im zweiten Auslöse-Modus wird das zweite Schaltmittel 2 nach einer vorbestimmten zweiten Dauer wieder geöffnet, welche in Figur 2 bei t2 endet und in diesem Ausführungsbeispiel deutlich länger als die erste vorbestimmte Dauer ist. In diesem Ausführungsbeispiel beträgt die vorbestimmte zweite Dauer rein beispielhaft 3 ms. Die vorbestimmte zweite Dauer ist länger als beispielsweise die vorbestimmte erste Dauer, weil die mit dem elektronischen Airbag-Zündkreis 60 verbundene Induktivität dem Aufbau eines Zündstroms vorerst entgegenwirkt.

Die Figur 3 zeigt eine Darstellung des Stromverlaufs an dem magnetischen Aktuator 50 während des zweiten Auslöse-Modus. Genauer ausgedrückt, zeigt die Figur 3 den Verlauf des Zündstroms durch die Induktivität eines mit dem in Figur 1 darstellten Zündkreises 60 verbundenen magnetischen Aktuators 50, welcher nach dem in Figur 2 dargestellten zweiten Auslöse-Modus, also über die vorbestimmte zweite Dauer, bestromt wird. Während die durchgezogene Linie sowohl in dem oberen als auch in dem unteren Diagramm der Figur 3 den zweiten Auslöse-Modus abbildet, zeigt die gestrichelte Linie in dem oberen Diagramm der Figur 3 eine rein beispielhaft gewählte vorbestimmte Schwelle für den durch die Induktivität des magnetischen Aktuators 50 fließenden Strom, ab deren Überschreitung durch den Zündstrom das Fließen eines Zündstroms durch die Zündstromdetektionseinheit 4 detektiert wird. Ferner zeigt die gepunktete Linie in dem oberen Diagramm der Figur 3 den durch die Induktivität des magnetischen Aktuators 50 beeinflussten Verlauf des Stromflusses durch den Airbag-Zündkreis 60. Dieser steigt zunächst linear an, da die Induktivität dem Aufbau eines Zündstroms entgegenwirkt. Dadurch fällt die Detektion des Zündstroms durch die Zündstromdetektionseinheit 4 zeitlich nicht mit der Initialisierung der Airbag-Zündung bei t0 zusammen, sondern verschiebt sich auf den Zeitpunkt t0a, zu welchem der Stromfluss durch die Induktivität die vorbestimmte Schwelle für den durch die Induktivität des magnetischen Aktuators 50 fließenden Strom überschreitet. Der Zeitpunkt des Überschreitens der Schwelle ist in dem unteren Diagramm der Figur 3 durch eine ebenfalls gepunktete Linie dargestellt. Ferner wird im Zeitpunkt tOb eine Plausibilitätsprüfung der Airbag-Auslösung durchgeführt. Da der für die Auslösung des Airbags benötigte Zündstrom für eine vorbestimmte Dauer durch den Airbag-Zündkreis 60 fließen muss, und sich der Zündstrom wie bereits beschrieben aufgrund der Induktivität nicht unmittelbar aufbaut, ist die zweite vorbestimmte Dauer gegenüber der Dauer der Bestromung einer Zündpille durch einen Airbag-Zündkreis des Standes der Technik verlängert. Der Betrag, um welche die vorbestimmte Dauer dabei gegenüber der Auslösedauer des Standes der Technik verlängert ist, hängt von der Induktivität des magnetischen Aktuators 50 ab und ergibt sich aus der Zeitdifferenz zwischen t0a und t0.

## Patentansprüche

1. Elektronischer Airbag-Zündkreis (60), umfassend
- einen ersten und einen zweiten Eingang (11,12) zur elektrisch leitfähigen Verbindung mit den Polen eines Energiespeichers,
- einen ersten und einen zweiten Ausgang (15,16) zur elektrisch leitfähigen Verbindung mit einem ersten und einem zweiten Anschluss eines magnetischen Aktuators (50),
- ein erstes Schaltmittel (1), dessen Schaltstrecke elektrisch leitfähig mit dem ersten Eingang (11) und dem ersten Ausgang (15) verbunden ist,
- ein zweites Schaltmittel (2), dessen Schaltstrecke elektrisch leitfähig mit dem zweiten Eingang (12) und dem zweiten Ausgang (16) verbunden ist,
- eine zweite elektrisch leitfähig mit einem Steueranschluss des zweiten Schaltmittels (2) verbundene zweite Ansteuerschaltung (17),
**dadurch gekennzeichnet dass**,
die zweite Ansteuerschaltung (17) dazu ausgebildet ist, das zweite Schaltmittel (2) in einem ersten Auslöse-Modus für eine erste vorbestimmte Dauer und in einem zweiten Auslöse-Modus für eine zweite, von der ersten Dauer verschiedene, vorbestimmte Dauer zu schließen, wobei das zweite Schaltmittel (2) im ersten Auslöse-Modus betrieben wird, wenn der Stromfluss durch die Schaltstrecke des zweiten Schaltmittels (2) im Zeitpunkt der Airbag-Zündung einem im Kurzschlussfall durch den elektronischen Airbag-Zündkreis (60) fließenden Kurzschlussstrom entspricht.

2. Elektronischer Airbag-Zündkreis (60) nach Anspruch 1, wobei das zweite Schaltmittel (2) im zweiten Auslöse-Modus betrieben wird, wenn der durch die Schaltstrecke des zweiten Schaltmittels (2) fließende Strom im Zeitpunkt der Airbag-Zündung ungleich einem im Kurzschlussfall durch den elektronischen Airbag-Zündkreis (60) fließenden Kurzschlussstrom ist.

3. Elektronischer Airbag-Zündkreis (60) nach einem der vorhergehenden Ansprüche, wobei die erste vorbestimmte Dauer kürzer als die zweite vorbestimmte Dauer ist.

4. Elektronischer Airbag-Zündkreis (60) nach Anspruch 3, wobei die während des zweiten Auslöse-Modus an dem ersten Schaltmittel (1) insgesamt umgesetzte Leistung nach Ablauf der zweiten Dauer derjenigen Leistung entspricht, deren Umsetzung an dem ersten Schaltmittel maximal zulässig ist.

5. Elektronischer Airbag-Zündkreis (60) nach einem der vorhergehenden Ansprüche, wobei der elektronische Airbag-Zündkreis (60) ferner eine elektrisch leitfähig mit einem Steueranschluss (6) des ersten Schaltmittels (1) verbundene erste Ansteuerschaltung (14) umfasst, welche eine Zündstromdetektionseinheit (4) und/oder eine Einheit zur Kontrolle eines Zündstroms (3) aufweist.

6. Elektronischer Airbag-Zündkreis (60) nach einem der vorhergehenden Ansprüche, wobei der magnetische Aktuator als LEA-Magnetaktuator ausgeführt ist.

7. Elektronischer Airbag-Zündkreis (60) nach einem der vorhergehenden Ansprüche, wobei der elektronische Airbag-Zündkreis (60) als integrierter Schaltkreis ausgeführt ist.

8. Elektronischer Airbag-Zündkreis (60) nach Anspruch 7, wobei der integrierte Schaltkreis als ASIC realisiert ist.

9. Elektronischer Airbag-Zündkreis (60) nach einem der vorhergehenden Ansprüche, wobei derjenige Pol des Energiespeichers, welcher mit dem zweiten Eingang (12) verbunden ist, ein Massepotenzial aufweist.

10. Kraftfahrzeug mit einem elektronischen Airbag-Zündkreis (60) nach einem der Ansprüche 1 bis 9.

## Claims

1. Electronic airbag ignition circuit (60), comprising
- a first and a second input (11, 12) for electrically conductive connection to the poles of an energy store,
- a first and a second output (15, 16) for electrically conductive connection to a first and a second terminal of a magnetic actuator (50),
- a first switching means (1), the switching path of which is electrically conductively connected to the first input (11) and the first output (15),
- a second switching means (2), the switching path of which is electrically conductively connected to the second input (12) and the second output (16),
- a second second drive circuit (17), which is electrically conductively connected to a control terminal of the second switching means (2),
**characterized in that**
the second drive circuit (17) is configured, in a first trigger mode, to close the second switching means (2) for a first predetermined duration and, in a second trigger mode, to close the second switching means (2) for a second predetermined duration that is different from the first duration, wherein, in the first trigger mode, the second switching means (2) is operated when the flow of current through the switching path of the second switching means (2) at the moment of airbag ignition corresponds to a short-circuit current that flows through the electronic airbag ignition circuit (60) in the event of a short circuit.

2. Electronic airbag ignition circuit (60) according to Claim 1, wherein, in the second trigger mode, the second switching means (2) is operated when the current that flows through the switching path of the second switching means (2) at the moment of airbag ignition is not equal to a short-circuit current that flows through the electronic airbag ignition circuit (60) in the event of a short circuit.

3. Electronic airbag ignition circuit (60) according to either of the preceding claims, wherein the first predetermined duration is shorter than the second predetermined duration.

4. Electronic airbag ignition circuit (60) according to Claim 3, wherein the total power converted at the first switching means (1) during the second trigger mode after the second duration has elapsed corresponds to that power that is the maximum permissible power that can be converted at the first switching means.

5. Electronic airbag ignition circuit (60) according to one of the preceding claims, wherein the electronic airbag ignition circuit (60) further comprises a first drive circuit (14), which is electrically conductively connected to a control terminal (6) of the first switching means (1) and has an ignition current detection unit (4) and/or a unit for monitoring an ignition current (3).

6. Electronic airbag ignition circuit (60) according to one of the preceding claims, wherein the magnetic actuator is embodied as an LEA magnetic actuator.

7. Electronic airbag ignition circuit (60) according to one of the preceding claims, wherein the electronic airbag ignition circuit (60) is embodied as an integrated circuit.

8. Electronic airbag ignition circuit (60) according to Claim 7, wherein the integrated circuit is implemented as an ASIC.

9. Electronic airbag ignition circuit (60) according to one of the preceding claims, wherein that pole of the energy store that is connected to the second input (12) has an earth potential.

10. Motor vehicle having an electronic airbag ignition circuit (60) according to one of Claims 1 to 9.

## Revendications

1. Circuit électronique d'allumage d'airbag (60), comprenant
- une première entrée et une deuxième entrée (11, 12) destinées à établir la connexion électriquement conductrice avec les pôles d'un accumulateur d'énergie,
- une première sortie et une deuxième sortie (15, 16) destinées à établir la connexion électriquement conductrice avec une première et une deuxième borne d'un actionneur (50) magnétique,
- un premier moyen de commutation (1), dont l'espace entre les contacts est raccordé de façon électriquement conductrice à la première entrée (11) et à la première sortie (15),
- un deuxième moyen de commutation (2), dont l'espace entre les contacts est raccordé de façon électriquement conductrice à la deuxième entrée (12) et à la deuxième sortie (16),
- un deuxième deuxième circuit de commande (17) raccordé de façon électriquement conductrice à une borne de commande du deuxième moyen de commutation (2), **caractérisé en ce que**
le deuxième circuit de commande (17) est constitué pour fermer le deuxième moyen de commutation (2) dans un premier mode de déclenchement pendant une première durée prédéfinie et dans un deuxième mode de déclenchement pendant une deuxième durée prédéfinie différente de la première durée, le deuxième moyen de commutation (2) étant mis en fonctionnement dans le premier mode de déclenchement quand le flux de courant traversant l'espace entre les contacts du deuxième moyen de commutation (2) au moment de l'allumage de l'airbag correspond à un courant de court-circuit traversant le circuit électronique d'allumage d'airbag (60) en cas de court-circuit.

2. Circuit électronique d'allumage d'airbag (60) selon la revendication 1, le deuxième moyen de commutation (2) étant mis en fonctionnement dans le deuxième mode de déclenchement quand le courant traversant l'espace entre les contacts du deuxième moyen de commutation (2) au moment de l'allumage de l'airbag est différent d'un courant de court-circuit traversant le circuit électronique d'allumage d'airbag (60) en cas de court-circuit.

3. Circuit électronique d'allumage d'airbag (60) selon l'une des revendications précédentes, la première durée prédéfinie étant plus courte que la deuxième durée prédéfinie.

4. Circuit électronique d'allumage d'airbag (60) selon la revendication 3, la puissance convertie en totalité pendant le deuxième mode de déclenchement sur le premier moyen de commutation (1) à l'expiration de la deuxième durée correspond à la puissance dont la conversion est admissible au maximum sur le premier moyen de commutation.

5. Circuit électronique d'allumage d'airbag (60) selon l'une des revendications précédentes, le circuit électronique d'allumage d'airbag (60) comprenant en outre un premier circuit de commande (14) qui est raccordé de façon électriquement conductrice à une borne de commande (6) du premier moyen de commutation (1) et qui présente une unité de détection de courant d'allumage (4) et/ou une unité destinée au contrôle d'un courant d'allumage (3).

6. Circuit électronique d'allumage d'airbag (60) selon l'une des revendications précédentes, l'actionneur magnétique étant réalisé en tant qu'actionneur magnétique LEA.

7. Circuit électronique d'allumage d'airbag (60) selon l'une des revendications précédentes, le circuit électronique d'allumage d'airbag (60) étant réalisé en tant que circuit intégré.

8. Circuit électronique d'allumage d'airbag (60) selon la revendication 7, le circuit intégré étant réalisé en tant que circuit ASIC.

9. Circuit électronique d'allumage d'airbag (60) selon l'une des revendications précédentes, le pôle de l'accumulateur d'énergie qui est raccordé à la deuxième entrée (12) présentant un potentiel de masse.

10. Véhicule automobile avec un circuit électronique d'allumage d'airbag (60) selon l'une des revendications 1 à 9.
